# EUROPÄISCHE PATENTSCHRIFT

(11) **EP 2 096 459 B1**
(45) Veröffentlichungstag und Bekanntmachung des Hinweises auf die Patenterteilung: **01.11.2017**
(21) Anmeldenummer: 09153945.2
(22) Anmeldetag: 27.02.2009
(51) Int. Cl.: G01S 7/491, G01S 17/87

(54) **Sensorsystem mit einer Beleuchtungseinrichtung und einer Detektoreinrichtung**
Sensor system with a lighting device and a detection device
Système de capteur doté d'un dispositif d'éclairage et d'un dispositif de détecteur

(30) Priorität: 29.02.2008 DE 102008011865; 09.05.2008 DE 102008022941
(43) Veröffentlichungstag der Anmeldung: 02.09.2009
(73) Patentinhaber: OSRAM Opto Semiconductors GmbH, 93055 Regensburg (DE)
(72) Erfinder: Behringer, Martin Rudolf, 93051 Regensburg (DE); Heerlein, Jörg, 93161 Sinzing (DE); Luft, Johann, 93195 Wolfsegg (DE)
(74) Vertreter: Epping - Hermann - Fischer

(56) Entgegenhaltungen:
- EP-A1- 0 948 106
- EP-A1- 0 987 564
- DE-A1-102005 055 572
- DE-A1-102007 004 609
- US-A- 5 212 706
- US-A- 5 684 309
- US-A- 6 144 683
- US-A1- 2004 179 566
- US-A1- 2007 062 092

## Beschreibung

Die vorliegende Anmeldung betrifft ein Sensorsystem mit einer Beleuchtungseinrichtung und einer Detektoreinrichtung.

Die Druckschrift DE 102007004609 A1 offenbart eine Vorrichtung für ein Fahrzeug-Lidar-System mit einer Mehrzahl von Halbleiterlasern und einem optischen Element, das in Bezug auf die Mehrzahl von Lasern so befestigt ist, dass die Laserstrahlung in unterschiedliche Richtungen abgestrahlt wird.

Die Druckschrift US 2007/062092 A1 offenbart ein Zielsystem für eine Waffe mit zwei Infrarotemittern.

Die Druckschrift DE 102005055572 A1 betrifft einen abtastenden optischen Abstandssensor, dessen drehende Teile keine aktiven Bauteile enthalten und trotzdem die Abtastung einer Szene mit mehreren Abtastprojektionen oder mehreren Wellenlängen erfolgen kann.

In der Druckschrift EP 0 948 106 ist ein Quantenkaskadenlaser beschrieben, der zur Emission von Infrarotstrahlung mit zwei verschiedenen Wellenlängen geeignet ist.

Ferner ist in der Druckschrift EP 0 987 564 eine Vorrichtung zur optischen Distanzmessung beschrieben, die als Strahlungsquelle einen 2-Wellenlängen-Laser aufweisen kann, der Strahlung mit einer Wellenlänge im infraroten Wellenlängenbereich emittiert. Durch Frequenzverdopplung erzeugt der 2-Wellenlängen-Laser zusätzlich ein im sichtbaren Wellenlängenbereich liegendes Strahlungsbündel.

Es ist eine Aufgabe der vorliegenden Anmeldung, ein Sensorsystem mit einer Detektoreinrichtung und einer Beleuchtungseinrichtung anzugeben, das besonders vielseitig einsetzbar ist.

Diese Aufgabe wird durch ein Sensorsystem gemäß Patentanspruch 1 gelöst. Ausgestaltungen und Weiterbildungen des Sensorsystems sind in den abhängigen Ansprüchen angegeben. Der Offenbarungsgehalt der Patentansprüche wird hiermit ausdrücklich durch Rückbezug in die Beschreibung aufgenommen.

Es wird ein Sensorsystem mit einer Beleuchtungseinrichtung und einer Detektoreinrichtung angegeben. Die Beleuchtungseinrichtung ist dazu vorgesehen, Laserstrahlung einer ersten Wellenlänge und Laserstrahlung einer zweiten, von der ersten verschiedenen Wellenlänge zu emittieren. Die Detektoreinrichtung ist dazu vorgesehen, elektromagnetische Strahlung der ersten und der zweiten Wellenlänge zu detektieren.

Unter dem Ausdruck "Laserstrahlung einer ersten Wellenlänge" wird vorliegend verstanden, dass die Beleuchtungseinrichtung Laserstrahlung emittiert, die ein Emissionsmaximum bei der ersten Wellenlänge hat. Die Laserstrahlung wird insbesondere schmalbandig emittiert. Beispielsweise umfasst die Laserstrahlung der ersten Wellenlänge im Wesentlichen nur Laserstrahlung, deren Wellenlänge um 10 nm oder weniger von der ersten Wellenlänge abweicht. Für die "Laserstrahlung einer zweiten Wellenlänge" gelten die vorausgehenden Ausführungen entsprechend.

Die Beleuchtungseinrichtung ist insbesondere dazu vorgesehen, elektromagnetische (Laser-)Strahlung mit einem Linienspektrum, das mindestens zwei Emissionslinien aufweist, zu emittieren. Vorzugsweise weist das Linienspektrum zwischen zwei und zehn Emissionslinien auf, wobei die Grenzen eingeschlossen sind. Anders ausgedrückt emittiert die Beleuchtungseinrichtung Laserstrahlung mit mehreren, insbesondere zwischen einschließlich zwei und einschließlich zehn, verschiedenen Wellenlängen.

Beispielsweise beleuchtet die Beleuchtungseinrichtung im Betrieb des Sensorsystems ein Objekt. Das Objekt reflektiert einen Anteil der von der Beleuchtungseinrichtung emittierten Laserstrahlung zu der Detektoreinrichtung, wo die reflektierte Laserstrahlung detektiert wird. Das von der Detektoreinrichtung dabei empfangene Signal ist umso größer, je größer der Reflexionskoeffizient des Objekts für die von der Beleuchtungseinrichtung emittierte Laserstrahlung ist. In der Regel ist der Reflexionskoeffizient wellenlängenabhängig, wobei die Wellenlängenabhängigkeit vom Material des Objekts abhängt. Verschiedene Materialien reflektieren daher bei einer vorgegebenen Wellenlänge einen verschieden großen Anteil der Laserstrahlung.

Mittels der Beleuchtungseinrichtung, die Laserstrahlung nicht nur einer Wellenlänge sondern Laserstrahlung einer Mehrzahl von verschiedenen Wellenlängen emittiert, ist die Zahl von Materialien, für die ein vergleichsweise großes Empfangssignal der Detektoreinrichtung erzielt werden kann, im Vergleich zu einer Beleuchtungseinrichtung mit nur einer emittierten Wellenlänge erhöht. Auf diese Weise ist die Gefahr verringert, dass die Detektion eines Objekts durch das Sensorsystem aufgrund des Materials des Objekts beeinträchtigt ist. Das Sensorsystem ist dadurch beispielsweise besonders vielseitig einsetzbar.

Eine Differenz zwischen der ersten und der zweiten Wellenlänge ist bei einer Ausgestaltung des Sensorsystems größer oder gleich 20 nm, insbesondere größer oder gleich 50 nm.

Bei einer Ausgestaltung ist die Beleuchtungseinrichtung dazu vorgesehen, Laserstrahlung einer ersten Wellenlänge, Laserstrahlung einer zweiten, von der ersten verschiedenen Wellenlänge und Laserstrahlung mindestens einer weiteren, von der ersten und zweiten verschiedenen Wellenlänge zu emittieren. Die Detektoreinrichtung ist in diesem Fall dazu vorgesehen, elektromagnetische Strahlung der ersten, der zweiten und der mindestens einen weiteren Wellenlänge zu detektieren. Die Beleuchtungseinrichtung kann somit eine Mehrzahl von Laserstrahlungen unterschiedlicher Wellenlängen emittieren, die die Detektoreinrichtung detektieren kann.

Die Beleuchtungseinrichtung enthält mindestens eine Halbleiterlaserdiode. Halbleiterlaserdioden haben in der Regel eine große elektro-optische Effizienz und erlauben insbesondere eine vergleichsweise große optische Ausgangsleistung.

Bei der Halbleiterlaserdiode kann es sich im vorliegenden Zusammenhang um einen Laserdiodenchip oder um ein Laserdiodenbauelement mit einem Laserdiodenchip und einem Gehäuse handeln. Die Halbleiterlaserdiode weist eine Halbleiterschichtenfolge mit einer zur Strahlungserzeugung vorgesehenen aktiven Zone auf. Vorzugsweise geht eine Mantelschicht der aktiven Zone voraus und eine weitere Mantelschicht folgt der aktiven Zone nach. Die Mantelschichten ("cladding layers") sind beispielsweise zum Ladungsträgereinschluss vorgesehen. Die Halbleiterlaserdiode weist zudem einen Resonator auf.

Die Halbleiterschichtenfolge basiert bei einer Ausgestaltung auf einem Halbleitermaterial, das aus der folgenden Gruppe ausgewählt ist: Galliumphosphid (GaP), Galliumarsenid (GaAs), Aluminiumgalliumarsenid (AlGaAs), Indiumgalliumphosphid (InGaP), Indiumaluminiumgalliumphosphid (InAlGaP), Galliumindiumarsenantimonid (GaInAsSb), Aluminiumgalliumarsenantimonid (AlGaAsSb), Indiumgalliumarsenphosphid (InGaAsP). Eine Halbleiterschichtenfolge, die auf einem dieser Halbleitermaterialien basiert weist mindestens eine Schicht - beispielsweise die aktive Zone - auf, die das Halbleitermaterial enthält. Die Halbleiterlaserdiode kann auch ein Substrat aufweisen, auf dem die Halbleiterschichtenfolge angeordnet und insbesondere epitaktisch aufgewachsen ist. Das Substrat weist bei einer Ausgestaltung Galliumantimonid (GaSb) oder Galliumarsenid (GaAs) auf.

Die aktive Zone enthält bevorzugt einen pn-Übergang, eine Doppelheterostruktur, einen Einfach-Quantentopf (SQW, single quantum well) oder, besonders bevorzugt, eine Mehrfach-Quantentopfstruktur (MQW, multi quantum well) zur Strahlungserzeugung. Die Bezeichnung Quantentopfstruktur entfaltet hierbei keine Bedeutung hinsichtlich der Dimensionalität der Quantisierung. Sie umfasst somit u.a. Quantentröge, Quantendrähte und Quantenpunkte und jede Kombination dieser Strukturen. Beispiele für MQW-Strukturen sind in den Druckschriften WO 01/39282, US 5,831,277, US 6,172,382 B1 und US 5,684,309 beschrieben. Beispielsweise bei einer kantenemittierenden Laserdiode ist die aktive Zone gemäß einer Ausgestaltung zwischen zwei Wellenleiterschichten der Halbleiterschichtenfolge angeordnet, die ihrerseits zwischen den beiden Mantelschichten angeordnet sind. Der Brechungsindex der Wellenleiterschichten unterscheidet sich zweckmäßigerweise von dem der Mantelschichten, so dass eine von der aktiven Zone emittierte elektromagnetische Strahlung zwischen den beiden Mantelschichten geführt ist. Der Resonator einer kantenemittierenden Laserdiode kann beispielsweise von den Flanken der Halbleiterschichtenfolge gebildet sein.

Alternativ kann es sich bei der Laserdiode auch um einen oberflächenemittierenden Halbleiterlaser handeln, zum Beispiel um einen VCSEL (Vertical Cavity Surface Emitting Laser) oder einen VECSEL (Vertical External Cavity Surface Emitting Laser).

Bei einem oberflächenemittierenden Halbleiterlaser erfolgt die Emission der Laserstrahlung im Gegensatz zu einer kantenemittierenden Laserdiode nicht von einer Flanke der Halbleiterschichtenfolge, sondern in einer Richtung, die in einem Winkel - insbesondere senkrecht - zu einer Haupterstreckungsebene der Halbleiterschichtenfolge verläuft. Unter der Haupterstreckungsebene wird vorliegend diejenige Ebene verstanden, deren Flächennormale die Richtung angibt, in der die Schichten des Halbleiterschichtstapels aufeinander folgen. Insbesondere steht die Haupterstreckungsebene also senkrecht auf der Wachstumsrichtung des Halbleiterschichtstapels.

Bei einem VCSEL handelt es sich um einen oberflächenemittierenden Halbleiterlaser, bei dem der Resonator insbesondere in die Halbleiterschichtenfolge integriert ist. Bei einem VECSEL hat der Resonator üblicherweise mindestens einen externen Spiegel.

Der oberflächenemittierende Halbleiterlaser enthält bei einer Ausgestaltung eine zusätzliche kantenemittierende Laserstruktur zum Pumpen der oberflächenemittierenden Halbleiterschichtenfolge. Die kantenemittierende Laserstruktur kann monolithisch integriert mit der oberflächenemittierenden Halbleiterschichtenfolge ausgebildet sein.

Bei einer vorliegend nicht beanspruchten Ausführungsform enthält die Beleuchtungseinrichtung mindestens eine erste Halbleiterlaserdiode, die im Betrieb Laserstrahlung der ersten Wellenlänge emittiert und mindestens eine zweite Halbleiterlaserdiode, die im Betrieb Laserstrahlung der zweiten Wellenlänge emittiert. Die erste und die zweite Halbleiterlaserdiode beziehungsweise die ersten Halbleiterlaserdioden und/oder die zweiten Halbleiterlaserdioden sind bei einer vorliegend nicht beanspruchten Ausgestaltung monolithisch integriert ausgebildet, insbesondere als Laser-Barren.

Vorliegend enthält die Beleuchtungseinrichtung eine Halbleiterlaserdiode, die eine erste aktive Zone und eine zweite aktive Zone aufweist. Die erste und die zweite aktive Zone sind beide in der Halbleiterschichtenfolge der Halbleiterlaserdiode enthalten, das heißt monolithisch integriert ausgebildet, und übereinander gestapelt. Die Beleuchtungseinrichtung kann auch mehrere solcher Halbleiterlaserdioden enthalten, die bei einer Weiterbildung lateral benachbart in monolithisch integrierter Weise ausgeführt sind. Die Halbleiterlaserdioden bilden dann insbesondere einen Laser-Barren, oft auch als Array bezeichnet.

Insbesondere enthält die Halbleiterschichtenfolge zwischen der ersten und der zweiten aktiven Zone eine Tunneldiode. Die beiden aktiven Zonen sind insbesondere mittels der Tunneldiode elektrisch in Serie geschalten. Bei einer Ausgestaltung ist die Laserdiode kantenemittierend.

Eine derartige Halbleiterlaserdiode ist beispielsweise aus der Druckschrift WO 99/39405 im Prinzip bekannt. Weiterhin wird in der Druckschrift US 5,212,706 eine kantenemittierende Halbleiterlaserdiode beschrieben, bei der mehrere aktive Zonen monolithisch übereinander abgeschieden sind und die Laserdioden mittels Tunneldioden miteinander verbunden sind.

Vorliegend emittiert die erste aktive Zone im Betrieb der Halbleiterlaserdiode Laserstrahlung der ersten Wellenlänge und die zweite aktive Zone emittiert im Betrieb der Halbleiterlaserdiode Laserstrahlung der zweiten Wellenlänge. Mindestens eine der innerhalb eines Schichtstapels übereinander angeordneten aktiven Zonen emittiert also Laserstrahlung einer Wellenlänge λ1 und mindestens eine weitere aktive Zone Laserstrahlung einer Wellenlänge λ2, wobei λ1 ≠ λ2 ist.

Die Tunneldiode ist beispielsweise mittels einer hoch n-dotierten Schicht und einer hoch p-dotierten Schicht gebildet. Die hoch dotierten Schichten müssen dabei nicht notwendigerweise homogen dotiert sein, da bereits eine hohe Dotierung an der Seite, die der jeweils anderen hoch dotierten Schicht zugewandt ist, zur Ausbildung eines Tunnelübergangs ausreichen kann. Bei einer Weiterbildung ist eine Zwischenschicht zwischen den beiden hoch dotierten Schichten vorgesehen. Die Zwischenschicht kann undotiert, n-dotiert oder p-dotiert sein. Jedoch weist die Zwischenschicht vorzugsweise eine niedrigere Dotierstoffkonzentration auf, als eine oder beide der hochdotierten Schichten.

Die erste und die zweite aktive Zone weisen jeweils eine Quantentopfstruktur auf. Die der ersten aktiven Zone zugeordnete Quantentopfstruktur und die der zweiten aktiven Zone zugeordnete Quantentopfstruktur unterscheiden sich bei einer Weiterbildung zur Realisierung der verschiedenen Emissionswellenlängen in ihren Schichtdicken. Alternativ oder zusätzlich ist es auch möglich, dass sich die Dimension der Quantisierung der Ladungsträger zwischen der Quantentopfstruktur der ersten aktiven Zonen und der Quantentopfstruktur der zweiten aktiven Zone unterscheidet. Beispielsweise kann eine der aktiven Zonen Quantenpunkte oder -drähte aufweisen, während die andere aktive Zone Quantentröge aufweist. Die der ersten aktiven Zone zugeordnete Quantentopfstruktur und die der zweiten aktiven Zone zugeordnete Quantentopfstruktur können sich alternativ oder zusätzlich zur Realisierung der verschiedenen Emissionswellenlängen in ihrer Materialzusammensetzung unterscheiden.

Die Anzahl der aktiven Zonen der Halbleiterlaserdiode beträgt vorzugsweise zwischen einschließlich zwei und einschließlich zehn. Es ist beispielsweise möglich, dass die Halbleiterlaserdiode drei oder mehr aktive Zonen mit jeweils unterschiedlicher Wellenlänge der emittierten Laserstrahlung aufweist. Es ist auch möglich, dass mehrere der aktiven Zonen der Halbleiterlaserdiode Laserstrahlung der ersten Wellenlänge emittieren, um eine möglichst große Leistung bei dieser Wellenlänge zu erzielen. In diesem Fall enthält die Halbleiterlaserdiode mindestens eine weitere aktive Zone, die bei der zweiten Wellenlänge emittiert.

Eine Resonatorlänge der Halbleiterlaserdiode beträgt bevorzugt zwischen 0,3 mm und 10 mm. Die Resonatorlänge ist beispielsweise durch den Abstand der den Resonator ausbildenden Seitenflanken der kantenemittierenden Halbleiterlaserdiode gegeben.

Die Halbleiterlaserdiode kann beispielsweise als Breitstreifen-Laserdiode oder als Trapezlaser ausgeführt sein. Mit einer solchen Laserdiode kann mit Vorteil eine besonders hohe Strahlungsleistung der emittierten Laserstrahlung erzielt werden. Die aktive Zone einer Breitstreifen-Laserdiode hat zum Beispiel eine laterale Ausdehnung von größer oder gleich 50 µm, vorzugsweise von größer oder gleich 100 µm. Bei einem Trapezlaser vergrößert sich insbesondere, zumindest über einen Teil der Resonatorlänge, die laterale Ausdehnung der aktiven Zone in Richtung von einem Resonatorspiegel zum zweiten Resonatorspiegel. Die aktive Zone hat in diesem Teil der Resonatorlänge in Draufsicht insbesondere eine trapezförmige Kontur. Die Kontur und/oder die laterale Ausdehnung der aktiven Zone ist zum Beispiel durch die Form einer Elektrode und/oder durch die Form der Halbleiterschichtenfolge, insbesondere durch eine Strukturierung der Halbleiterschichtenfolge, vorgegeben.

Eine besonders gute Strahlqualität erhält man mit einem indexgeführten Rippenwellenleiter. Dazu ist zumindest ein Teil des Schichtenstapels, also der Halbleiterschichtenfolge, in Form von schmalen Stegen strukturiert, die den indexgeführten Rippenwellenleiter realisieren.

Eine weitere Verbesserung der Strahlqualität kann erzielt werden, wenn der Schichtenstapel zumindest eine Blendenschicht umfasst. Die Blendenschicht weist eine streifenförmige Öffnung auf, die die längs des Stegs verläuft und lateral von einem isolierenden Bereich der Blendenschicht umgeben ist. Die streifenförmige Öffnung hat beispielsweise eine Breite von 1-10 µm, typisch 2-6 µm, wobei die Grenzen jeweils eingeschlossen sind. Eine solch schmale Struktur definiert einen Wellenleiter für die Laserstrahlung, der insbesondere ausschließlich die Ausbildung der Grundmode erlaubt.

In einem einfachen Verfahren zur Herstellung einer solchen Blende kann diese als so genannte Oxidblende in einem Oxidationsverfahren hergestellt werden. Beispielsweise wird dazu in einem Schichtenstapel, dessen aktive Zone eine Quantentopfstruktur aufweist, eine Blendenschicht vorgesehen, deren Material zu einem elektrischen Isolator oxidierbar ist. Die Blendenschicht wird vorteilhaft in ausreichendem Abstand zur Quantentopfstruktur angeordnet. Nach einer Strukturierung des Schichtenstapels zu schmalen Stegen von typischerweise 20-30µm Breite können die Blendenschichten dann von ihren Stosskanten mit den Stegseitenwänden bzw. mit den Grabenwänden zwischen zwei Stegen her in lateraler Richtung fortschreitend oxidiert werden. Dabei entsteht die sich zunehmend von außen her in ihrer Öffnung verkleinernde Blende.

Die oxidierenden Bedingungen werden solange aufrecht erhalten, bis die streifenförmige Blendenöffnung einen geeigneten Wert erreicht hat, der im so verengten Wellenleiter die Ausbildung ausschließlich der Grundmode erlaubt. Eine geeignete Breite liegt beispielsweise zwischen 1 und 10 µm, typisch bei 2-6µm, wobei die Grenzen jeweils eingeschlossen sind. Als oxidierbares Material sind beispielsweise aluminiumhaltige Blendenschichten geeignet.

Bei einer Beleuchtungseinrichtung, die eine Halbleiterlaserdiode mit monolithisch übereinander gestapelten aktiven Zonen enthält, kann eine besonders geringe Baugröße der Beleuchtungseinrichtung erzielt werden. Zugleich wird eine besonders hohe optische Ausgangsleistung der Beleuchtungseinrichtung, beispielsweise von größer oder gleich 1 W, bevorzugt von größer oder gleich 10 W, erzielt.

Bei einer Ausgestaltung des Sensorsystems beträgt eine Differenz zwischen der ersten und der zweiten Wellenlänge, bei mehreren verschiedenen Wellenlängen insbesondere zwischen der kleinsten und der größten der Wellenlänge, 200 nm oder weniger. Erfindungsgemäß ist die Beleuchtungseinrichtung dazu vorgesehen, Laserstrahlung im infraroten Spektralbereich zu emittieren. Hierbei liegen die erste und die zweite Wellenlänge im infraroten Spektralbereich. Beispielsweise kann mindestens eine der aktiven Zonen AlGaInAs - also AlₙGaₘIn₁₋ₙ₋ₘAs, wobei 0 ≤ n ≤ 1, 0 ≤ m ≤ 1 und n+m ≤ 1 - enthalten. Beispielsweise dieses Materialsystem ermöglicht Emissionswellenlängen von z.B. 780-1100nm, wobei die Grenzen eingeschlossen sind. Bei einer Weiterbildung hat die erste und/oder die zweite Wellenlänge einen Wert zwischen einschließlich 800 nm und einschließlich 1000 nm.

Das Sensorsystem ist bei einer Ausgestaltung zur Messung eines Abstands und/oder einer Geschwindigkeit vorgesehen. Beispielsweise enthält die Detektoreinrichtung bei dieser Ausgestaltung einen Einkanalsensor, etwa eine Fotodiode. Das Sensorsystem ist zum Beispiel in einem Kollisionswarnsystem, insbesondere einem Kollisionswarnsystem für Kraftfahrzeuge, enthalten.

Bei einer anderen Ausgestaltung ist das Sensorsystem in einem Nachtsichtgerät enthalten. Die Detektoreinrichtung des Sensorsystems enthält beispielsweise bei dieser Ausgestaltung einen Mehrkanalsensor, etwa einen Halbleiterbildsensor und/oder einen Restlichtverstärker. Mittels der Beleuchtungseinrichtung, die Laserstrahlung einer Mehrzahl verschiedener Wellenlängen emittiert, kann ein besonders hoher Kontrast des von dem Nachtsichtgerät dargestellten Bilds erzielt werden.

Weitere Vorteile und vorteilhafte Ausgestaltungen ergeben sich aus dem folgenden, in Zusammenhang mit den Figuren beschriebenen Ausführungsbeispiel.

Es zeigen:
- Figur 1,: einen schematischen Querschnitt durch ein Sensorsystem gemäß einem Ausführungsbeispiel und
- Figur 2,: eine schematische perspektivische Ansicht einer Halbleiterlaserdiode des Sensorsystems gemäß dem Ausführungsbeispiel der Figur 1.

Ähnliche oder ähnlich wirkende Bestandteile sind in den Figuren und Ausführungsbeispielen mit denselben Bezugszeichen versehen. Die Figuren und die Größenverhältnisse der in den Figuren dargestellten Elemente untereinander sind nicht als maßstäblich zu betrachten. Vielmehr können einzelne Elemente zum besseren Verständnis und/oder zur besseren Darstellbarkeit übertrieben groß dargestellt sein.

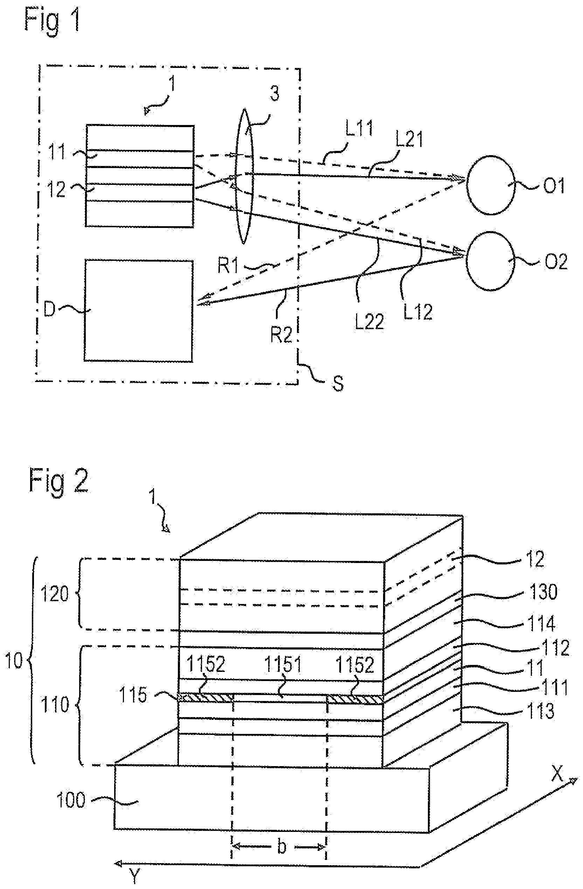

Figur 1 zeigt ein Ausführungsbeispiel eines Sensorsystems S. Das Sensorsystem S enthält Beleuchtungseinrichtung. Die Beleuchtungseinrichtung enthält vorliegend eine Halbleiterlaserdiode 1 und ein optisches Element 3 oder ein optisches System 3, das eine Mehrzahl von optischen Elementen aufweist.

Die Halbleiterlaserdiode 1, die in Figur 1 stark vereinfacht dargestellt ist, weist eine erste aktive Zone 11 und eine zweite aktive Zone 12 auf. Die erste aktive Zone 11 emittiert im Betrieb der Halbleiterlaserdiode 1 Laserstrahlung L11, L12 einer ersten Wellenlänge λ1. Die zweite aktive Zone 12 emittiert im Betrieb der Halbleiterlaserdiode 1 Laserstrahlung L21, L22 einer zweiten Wellenlänge λ2.

Die Halbleiterlaserdiode 1 kann vorzugsweise eine Mehrzahl von aktiven Zonen aufweisen (nicht dargestellt), wobei die aktiven Zonen jeweils im Betrieb der Halbleiterlaserdiode 1 Laserstrahlung unterschiedlicher Wellenlängen emittieren.

Das optische Element oder optische System 3 ist dazu vorgesehen, die von den aktiven Zonen 11, 12 emittierte Laserstrahlung L11, L12, L21, L22 zu formen. Beispielsweise ist das optische Element oder System 3 zur Strahlaufweitung, -umlenkung und/oder -fokussierung vorgesehen. Bei dem optischen Element oder mindestens einem der optischen Elemente des optischen Systems kann es sich beispielsweise um eine Linse, ein Beugungsgitter, einen Spiegel und/oder um einen Lichtleiter handeln. Ein solches optisches Element oder System ist auch für andere Ausgestaltungen des Sensorsystems S geeignet.

Weiter weist das Sensorsystem S eine Detektoreinrichtung D auf. Die Detektoreinrichtung D ist dazu vorgesehen, elektromagnetische Strahlung der ersten Wellenlänge λ1 und elektromagnetische Strahlung der zweiten Wellenlänge λ2 zu detektieren.

Die Detektoreinrichtung D enthält einen Einkanalsensor wie eine Fotodiode oder einen Mehrkanalsensor, etwa einen Halbleiterbildsensor (CCD, Charge Coupled Device) und/oder einen Restlichtverstärker. Beispielsweise handelt es sich bei dem Sensorsystem S um ein Nachtsichtgerät und die Detektoreinrichtung D enthält einen Mehrkanalsensor.

Im Betrieb des Sensorsystems S beleuchtet die Beleuchtungseinrichtung einen Raumwinkelbereich der Umgebung. Befindet sich ein Objekt O1, 02 im beleuchteten Raumwinkelbereich, wird es insbesondere von Laserstrahlung L11 bzw. L12 der ersten Wellenlänge λ1 und von Laserstrahlung L21 bzw. L22 der zweiten Wellenlänge λ2 getroffen.

Der Reflexionskoeffizient bei den Wellenlängen λ1 und λ2 ist vom beleuchteten Material des Objekts O1, O2 abhängig. Beispielsweise hat ein erstes Objekt O1 einen vergleichsweise großen Reflexionskoeffizienten bei der ersten Wellenlänge λ1 und einen vergleichsweise kleinen Reflexionskoeffizienten bei der zweiten Wellenlänge λ2. Ein zweites Objekt O2 hat einen vergleichsweise großen Reflexionskoeffizienten bei der zweiten Wellenlänge λ2 und einen vergleichsweise kleinen Reflexionskoeffizienten bei der ersten Wellenlänge λ1.

Das erste Objekt O1 reflektiert daher im Wesentlichen Laserstrahlung L11 der ersten Wellenlänge λ1, so dass ein reflektierter Anteil R1 dieser von der ersten aktiven Zone 11 emittierten Laserstrahlung zur Detektoreinrichtung D gelangt. Das zweite Objekt O2 reflektiert im Wesentlichen Laserstrahlung L22 der zweiten Wellenlänge λ2, so dass ein reflektierter Anteil R2 dieser von der zweiten aktiven Zone 12 emittierten Laserstrahlung ebenfalls zur Detektoreinrichtung D gelangt.

Dagegen reflektiert das erste Objekt O1 von der zweiten aktiven Zone 12 emittierte Laserstrahlung L21 nicht oder nur geringfügig und/oder das zweite Objekt O2 reflektiert von der ersten aktiven Zone 11 emittierte Laserstrahlung L12 nicht oder nur geringfügig.

Auf diese Weise ist das Sensorsystem S - im Gegensatz zu einem Sensorsystem, das nur mit einer der Wellenlängen λ1 oder λ2 arbeitet - vorteilhafterweise zur Detektion sowohl des ersten Objekts O1 wie auch des zweiten Objekts O2 geeignet. Beispielsweise bei einem Sensorsystem, das ein Nachtsichtgerät ist, können mit Vorteil beide Objekte O1, O2 mit einem hohen Kontrast zum Hintergrund abgebildet werden.

Figur 2 zeigt eine schematische perspektivische Ansicht der Halbleiterlaserdiode 1 des Sensorsystems S gemäß dem Ausführungsbeispiel der Figur 1.

Die Halbleiterlaserdiode 1 enthält eine Halbleiterschichtenfolge 10, die epitaktisch auf einem Substrat 100 aufgewachsen ist. Die Halbleiterschichtenfolge 10 basiert vorzugsweise auf einem III-V-Verbindungshalbleitermaterial, insbesondere auf einem Arsenid-, Nitrid- oder Phosphidverbindungshalbleitermaterial.

Beispielsweise kann die Halbleiterschichtenfolge 10 InₓAl_{y}Ga_{1-x-y}N, InₓAl_{y}Ga_{1-x-y}P oder InₓAl_{y}Ga_{1-x-y}As, jeweils mit 0 ≤ x ≤ 1, 0 ≤ y ≤ 1 und x + y ≤ 1, enthalten. Dabei muss das III-V-Verbindungshalbleitermaterial nicht zwingend eine mathematisch exakte Zusammensetzung nach einer der obigen Formeln aufweisen. Vielmehr kann es einen oder mehrere Dotierstoffe sowie zusätzliche Bestandteile aufweisen, die die physikalischen Eigenschaften des Materials im Wesentlichen nicht ändern. Der Einfachheit halber beinhalten obige Formeln jedoch nur die wesentlichen Bestandteile des Kristallgitters, auch wenn diese teilweise durch geringe Mengen weiterer Stoffe ersetzt sein können.

Die Materialauswahl für die Halbleiterschichtenfolge 10 erfolgt anhand der gewünschten Emissionswellenlängen der Halbleiterlaserdiode 1. Das Substrat 100 wird anhand der vorzugsweise epitaktisch aufzuwachsenden Halbleiterschichtenfolge 10 ausgewählt und kann insbesondere ein GaAs-, GaN-, SiC- oder ein Siliziumsubstrat sein.

Die Halbleiterschichtenfolge 10 weist ein erstes Diodenlaserschichtsystem 110 auf, das die erste aktive Zone 11 enthält. Es weist ein zweites Diodenlaserschichtsystem 120 auf, das die zweite aktive Zone 12 enthält.

Anders als das erste Diodenlaserschichtsystem 110 ist das zweite Diodenlaserschichtsystem 120 in Figur 2 nur grob angedeutet. Beispielsweise ist das zweite Diodenlaserschichtsystem 120 analog zum ersten Diodenlaserschichtsystem 110 aufgebaut. Zur Erzielung der verschiedenen Emissionswellenlängen λ1 und λ2 unterscheiden sich die aktiven Zonen 11, 12 jedoch beispielsweise in ihrem Material und/oder ihren Schichtdicken und/oder in der Dimension der Quantisierung voneinander.

Das erste und zweite Diodenlaserschichtsystem 110, 120 - und damit die erste und die zweite aktive Zone 11, 12 - folgen in Richtung einer Flächennormalen auf die Haupterstreckungsebene des Substrats 100 aufeinander. Die Flächennormale fällt in der Figur 2 mit der (nicht dargestellten) z-Richtung des rechtwinkligen kartesischen Koordinatensystems zusammen, dessen x- und y-Richtungen in Figur 2 eingezeichnet sind.

Zwischen den beiden Diodenlaserschichtsystemen 110, 120 ist eine Tunneldiode 130 angeordnet. Die Tunneldiode enthält vorliegend - beispielsweise in Richtung von der ersten aktiven Zone 11 zur zweiten aktiven Zone 12 - eine hoch p-dotierte Schicht, eine undotierte oder gering dotierte Zwischenschicht und eine hoch n-dotierte Schicht.

Das erste Diodenlaserschichtsystem 110 enthält die erste aktive Zone 11, die vorliegend eine Mehrfach-Quantentopfstruktur enthält. Bei der Ausbildung der aktiven Zonen 11, 12 als Quantentopfstruktur ist die Laserschwelle im Vergleich zu einem Halbleiterlaser mit einem herkömmlichen pn-Übergang als aktive Zone vergleichsweise gering. Weiterhin ist in diesem Fall auch die Temperaturabhängigkeit der Emissionswellenlängen λ1, λ2 vorteilhaft gering.

In Richtung von der aktiven Zone 11 weg weist das erste Diodenlaserschichtsystem 110 vorliegend sowohl in Richtung zum Substrat 100 hin wie auch in Richtung zur zweiten aktiven Zone 12 hin jeweils eine Wellenleiterschicht 111, 112 und eine Mantelschicht ("cladding layer") 113, 114 auf. Mittels der Wellenleiterschichten 111, 112 ist von der aktiven Zone 11 emittierte elektromagnetische Strahlung zwischen den Mantelschichten 113, 114 geführt. Die dem Substrat 100 zugewandte Mantelschicht 113 ist vorliegend n-leitend dotiert. Ein Schichtwachstum in umgekehrter Reihenfolge, also mit einer dem Substrat 100 zugewandten p-leitenden Mantelschicht 113 ist ebenfalls denkbar.

Der Laserresonator der Halbleiterlaserdiode 1 wird zum Beispiel durch die Seitenflanken der Halbleiterschichtenfolge 10 ausgebildet. Eine zumindest teilweise Reflexion der in den aktiven Zonen 11, 12 erzeugten Laserstrahlung an den Seitenflanken erfolgt beispielsweise aufgrund des Brechungsindexsprungs zwischen dem Material der Halbleiterschichtenfolge 10 und dem Umgebungsmedium (zum Beispiel Luft). Alternativ können die Seitenflanken der Halbleiterlaserdiode 1 auch mit einer reflexionserhöhenden Beschichtung (nicht dargestellt) versehen sein. Bei einer bevorzugten Ausgestaltung beträgt die Länge L des Laserresonators zwischen einschließlich 0,3 mm und einschließlich 10 mm.

Vorliegend ist zwischen der aktiven Zone 11 und einer der Mantelschichten 114 eine Blendenschicht 115 ausgebildet. Alternativ kann die Blendenschicht 115 auch am Rand oder im Innern von Wellenleiterschicht 111, 112 oder Mantelschicht 113, 114 angeordnet sein. Beispielsweise ist die Blendenschicht eine aluminiumhaltige Schicht, insbesondere enthält sie AlAs oder GaAlAs oder besteht aus einem dieser Materialien. Die Blendenschicht 115 weist einen elektrisch leitfähigen oder zumindest halbleitenden Mittelbereich 1151 auf, der eine streifenförmige Öffnung zwischen zwei isolierenden Randbereichen 1152 darstellt.

Die isolierenden Randbereiche 1152 sind beispielsweise mittels eines Oxidationsverfahrens hergestellt. Die in den Gräben freiliegenden Stoßkanten der Blendenschicht 10 können durch Oxidation, z.B. durch Einstellen oxidierender Bedingungen über eine sauerstoffhaltige Atmosphäre bei einer ausreichend hohen Temperatur, oder durch nasschemisches Behandeln mit einer oxidierenden Lösung in einen elektrischen Isolator überführt werden, wie dies in der Figur 2 bereits dargestellt ist.

Mit Hilfe dieser Blende wird die Intensitätsverteilung der Laserstrahlung im Wesentlichen auf den Blendenbereich beschränkt, beziehungsweise ein Wellenleiter geschaffen, der eine ungefähr der Blendenöffnung entsprechende Breite b aufweist, die die Ausbildung der Laserstrahlung ausschließlich in der Grundmode erlaubt.

Die Halbleiterschichtenfolge 10 ist zur Realisierung einer indexgeführten Laserstruktur zu mindestens einem schmalen Steg strukturiert. Der Steg weist seine längste Ausdehnung, die insbesondere der Resonatorlänge der Halbleiterlaserdiode 1 entspricht, in x-Richtung auf. Beispielsweise hat die Resonatorlänge einen Wert zwischen 0,3 mm und 10 mm, wobei die Grenzen eingeschlossen sind.

Vorliegend verläuft auch die streifenförmige Öffnung 1151 der Blendenschicht 115 längs des Stegs, also in x-Richtung. Die streifenförmige Öffnung hat eine Breite b in y-Richtung, also in Richtung der Stegbreite, die beispielsweise einen Wert zwischen 6 µm und 12 µm hat. Der Steg hat vorliegend eine Breite, also eine Ausdehnung in y-Richtung, zwischen 20 µm und 30 µm. Die Grenzen der Bereiche sind dabei jeweils eingeschlossen. Die Erfindung ist nicht durch die Beschreibung anhand der Ausführungsbeispiele beschränkt. Beispielsweise kann die Halbleiterlaserdiode 1 als Breitstreifenlaser ausgeführt sein. In diesem Fall weist sie insbesondere keine Blendenschicht 115 auf. Sie braucht auch keine indexgeführte Laserstruktur aufweisen, sondern kann beispielsweise gewinngeführt ausgebildet sein. Bei einer als Breitstreifenlaser ausgeführten Halbleiterlaserdiode 1, die eine indexgeführte Laserstruktur aufweist, hat der Steg zum Beispiel eine Breite von größer oder gleich 50 µm, insbesondere von größer oder gleich 100 µm.

## Patentansprüche

1. Sensorsystem (S) mit einer Beleuchtungseinrichtung (1, 3), die eine Halbleiterlaserdiode (1) enthält, und einer Detektoreinrichtung (D), wobei die Beleuchtungseinrichtung Laserstrahlung einer ersten Wellenlänge (L11, L12) und Laserstrahlung einer zweiten, von der ersten verschiedenen Wellenlänge (L21, L22) emittiert und ein Objekt beleuchtet, und die Detektoreinrichtung elektromagnetische Strahlung der ersten und der zweiten Wellenlänge detektiert,
**dadurch gekennzeichnet, dass**
- die Halbleiterlaserdiode (1) eine erste aktive Zone (11) und eine zweite aktive Zone (12) aufweist,
- die erste und die zweite aktive Zone (11, 12) in einer Halbleiterschichtenfolge (10) der Halbleiterlaserdiode (1) enthalten und übereinander gestapelt sind,
- die erste aktive Zone (11) im Betrieb der Halbleiterlaserdiode (1) Laserstrahlung der ersten Wellenlänge (L11, L12) emittiert und die zweite aktive Zone (12) im Betrieb der Halbleiterlaserdiode (1) Laserstrahlung der zweiten Wellenlänge (L21, L22) emittiert, wobei das Objekt einen Anteil der von der Beleuchtungseinrichtung emittierten Laserstrahlung zu der Detektoreinrichtung reflektiert, wo die reflektierte Laserstrahlung detektiert wird, und wobei die erste (L11, L12) und die zweite Wellenlänge (L21, L22) im infraroten Spektralbereich liegen, und
- die erste und die zweite aktive Zone (11, 12) jeweils eine Quantentopfstruktur aufweisen und die Quantentopfstrukturen sich in ihren Schichtdicken und/oder in der Dimension der Quantisierung unterscheiden.

2. Sensorsystem (S) nach Anspruch 1, wobei die Halbleiterschichtenfolge (10) zwischen der ersten und der zweiten aktiven Zone (11, 12) eine Tunneldiode (130) enthält.

3. Sensorsystem (S) nach Anspruch 1 oder 2, wobei die erste und die zweite aktive Zone (11, 12) jeweils eine Quantentopfstruktur aufweist und die Quantentopfstrukturen sich in ihrer Materialzusammensetzung unterscheiden.

4. Sensorsystem (S) nach einem der Ansprüche 1 bis 3, wobei eine der aktiven Zonen (11, 12) Quantenpunkte oder -drähte aufweist und die andere aktive Zone Quantentröge aufweist.

5. Sensorsystem (S) nach einem der Ansprüche 1 bis 4, wobei die Laserdiode (1) drei bis zehn aktive Zonen (11, 12) mit jeweils unterschiedlicher Wellenlänge der emittierten Laserstrahlung aufweist.

6. Sensorsystem (S) nach einem der Ansprüche 1 bis 5, wobei die Halbleiterschichtenfolge zur Ausbildung eines indexgeführten Rippenwellenleiters zu einem Steg strukturiert ist.

7. Sensorsystem (S) nach Anspruch 6, wobei die Halbleiterschichtenfolge eine Blendenschicht (115) enthält, die eine längs des Stegs verlaufende streifenförmige Öffnung (1151) aufweist, welche lateral von einem isolierenden Bereich (1152) umgeben ist.

8. Sensorsystem (S) nach Anspruch 7, wobei die streifenförmige Öffnung (1151) eine Breite von 1-10 µm hat.

9. Sensorsystem (S) nach einem der Ansprüche 1 bis 8, bei dem die Beleuchtungseinrichtung (1, 3) dazu vorgesehen ist, Laserstrahlung im infraroten Spektralbereich zu emittieren.

10. Sensorsystem (S) nach Anspruch 9, bei dem die erste und/oder die zweite Wellenlänge einen Wert zwischen einschließlich 800 nm und einschließlich 1000 nm hat.

11. Sensorsystem (S) nach einem der vorhergehenden Ansprüche, bei dem eine Differenz zwischen der ersten und der zweiten Wellenlänge größer oder gleich 20 nm ist.

12. Sensorsystem (S) nach einem der vorhergehenden Ansprüche, das zur Messung eines Abstands und/oder einer Geschwindigkeit vorgesehen ist.

13. Kollisionswarnsystem mit einem Sensorsystem (S) nach einem der vorhergehenden Ansprüche.

14. Nachtsichtgerät mit einem Sensorsystem (S) nach einem der Ansprüche 1 bis 12.

15. Nachtsichtgerät nach Anspruch 14, wobei die Detektoreinrichtung (D) einen Halbleiterbildsensor oder einen Restlichtverstärker enthält.

## Claims

1. A sensor system (S) comprising a lighting device (1, 3), which contains a semiconductor laser diode (1), and a detector device (D), wherein said lighting device emits laser radiation of a first wavelength (L11, L12) and laser radiation of a second wavelength different from the first (L21, L22) and illuminates an object, and said detector device detects electromagnetic radiation of said first and said second wavelength,
**characterized in that**
- said semiconductor laser diode (1) comprises a first active region (11) and a second active region (12),
- said first and second active regions (11, 12) are contained in a semiconductor layer sequence (10) of said semiconductor laser diode (1) and are stacked one on top of the other,
- said first active region (11) emits laser radiation of said first wavelength (L11, L12) and said second active region (12) emits laser radiation of said second wavelength (L21, L22) when said semiconductor laser diode (1) is operating, wherein the object reflects a portion of the laser radiation emitted by the lighting device to the detector device where the reflected laser radiation is detected, and wherein the first (L11, L12) and the second wavelength (L21, L22) are in the infrared spectral region, and
- each of said first and said second active regions (11, 12) has a quantum well structure and said quantum well structures differ in their layer thicknesses and/or in the dimension of quantization.

2. The sensor system(S) as in claim 1, wherein said semiconductor layer sequence (10) contains a tunnel diode (130) between said first and said second active region (11, 12).

3. The sensor system (S) as in claim 1 or 2, wherein each of said first and said second active regions (11, 12) has a quantum well structure and said quantum well structures differ in their material composition.

4. The sensor system (S) as in one of claims 1 to 3, wherein one of the active regions (11, 12) comprises quantum dots or quantum wires and the other active region comprises quantum troughs.

5. The sensor system (S) as in one of claims 1 to 4, wherein the laser diode (1) comprises three to ten active regions (11, 12) with respectively different wavelength of the emitted laser radiation.

6. The sensor system (S) as in one of claims 1 to 5, wherein
the semiconductor layer sequence is structured in the form of a web to create an index-guided ridge waveguide.

7. The sensor system (S) as in claim 6, wherein the semiconductor layer sequence contains a shutter layer (115) having a strip-shaped opening (1151) that runs the length of the web and is surrounded laterally by an insulating region (1152).

8. The sensor system (S) as in claim 7, wherein the strip-shaped opening (1151) has a width of 1-10 µm.

9. The sensor system (S) as in one of claims 1 to 8, wherein said lighting device (1, 3) is provided for emitting laser radiation in the infrared spectral region.

10. The sensor system (S) as in claim 9, wherein said first and/or said second wavelength has a value between 800 nm inclusive and 1000 nm inclusive.

11. The sensor system (S) as in one of the preceding claims, wherein a difference between said first and said second wavelength is greater than or equal to 20 nm.

12. The sensor system (S) as in one of the preceding claims, which is provided for measuring a distance and/or a speed.

13. A collision warning system comprising a sensor system (S) according to one of the preceding claims.

14. A night vision apparatus comprising a sensor system (S) according to one of claims 1 to 12.

15. The night vision apparatus as in claim 14, wherein the detector device (D) comprises a semiconductor image sensor or a low-light amplifier.

## Revendications

1. Système capteur (S) comprenant un dispositif d'éclairage (1, 3), qui contient une diode laser à semi-conducteurs (1), et un dispositif détecteur (D), le dispositif d'éclairage émettant un rayonnement laser d'une première longueur d'onde (L11, L12) et un rayonnement laser d'une deuxième longueur d'onde (L21, L22) différente de la première et éclairant un objet, et le dispositif détecteur détectant un rayonnement électromagnétique de la première et de la deuxième longueurs d'onde,
**caractérisé en ce que**
- la diode laser à semi-conducteurs (1) présente une première zone active (11) et une deuxième zone active (12),
- la première et la deuxième zones actives (11, 12) sont contenues et empilées l'une sur l'autre dans une succession de couches semi-conductrices (10) de la diode laser à semi-conducteurs (1),
- la première zone active (11), pendant le fonctionnement de la diode laser à semi-conducteurs (1), émet un rayonnement laser de la première longueur d'onde (L11, L12) et la deuxième zone active (12), pendant le fonctionnement de la diode laser à semi-conducteurs (1) émet un rayonnement laser de la deuxième longueur d'onde (L21, L22), l'objet réfléchissant une fraction du rayonnement laser émis par le dispositif d'éclairage vers le dispositif détecteur, où le rayonnement laser réfléchi est détecté, et la première (L11, L12) et la deuxième longueurs d'onde (L21, L22) étant situées dans le domaine spectral de l'infrarouge, et
- la première et la deuxième zones actives (11, 12) présentent respectivement une structure à puits quantique et les structures à puits quantique se distinguent dans leurs épaisseurs de couche et/ou dans la dimension de la quantification.

2. Système capteur (S) selon la revendication 1, la succession de couches à semi-conducteurs (10) contenant une diode tunnel (130) entre la première et la deuxième zones actives (11, 12).

3. Système capteur (S) selon la revendication 1 ou 2, la première et la deuxième zones actives (11, 12) présentant respectivement une structure à puits quantique et les structures à puits quantique se distinguant dans leur composition des matériaux.

4. Système capteur (S) selon l'une quelconque des revendications 1 à 3, une des zones actives (11, 12) présentant des points quantiques ou des fils quantiques et l'autre zone active présentant des puits quantiques.

5. Système capteur (S) selon l'une quelconque des revendications 1 à 4, la diode laser (1) présentant trois à dix zones actives (11, 12) ayant une longueur d'onde du rayonnement laser émis, respectivement différente.

6. Système capteur (S) selon l'une quelconque des revendications 1 à 5, la succession de couches à semi-conducteurs étant structurée pour la formation d'un guide d'ondes nervuré, guidé par indice, en une nervure.

7. Système capteur (S) selon la revendication 6, la succession de couches à semi-conducteurs contenant une couche d'ouverture (115) qui présente une ouverture (1151) en forme de bande s'étendant le long de la nervure, laquelle ouverture est entourée latéralement par une zone isolante (1152).

8. Système capteur (S) selon la revendication 7, l'ouverture (1151) en forme de bande ayant une largeur de 1 à 10 µm.

9. Système capteur (S) selon l'une quelconque des revendications 1 à 8, dans lequel le dispositif d'éclairage (1, 3) est ménagé pour émettre un rayonnement laser dans le domaine spectral de l'infrarouge.

10. Système capteur (S) selon la revendication 9, dans lequel la première et/ou la deuxième longueurs d'onde ont une valeur située entre y compris 800 nm et y compris 1000 nm.

11. Système capteur (S) selon l'une quelconque des revendications précédentes, dans lequel une différence entre la première et la deuxième longueurs d'onde est supérieure ou égale à 20 nm.

12. Système capteur (S) selon l'une quelconque des revendications précédentes, qui est ménagé pour la mesure d'une distance et/ou d'une vitesse.

13. Système d'avertissement de collision comprenant un système capteur (S) selon l'une quelconque des revendications précédentes.

14. Appareil de vision de nuit comprenant un système capteur (S) selon l'une quelconque des revendications 1 à 12.

15. Appareil de vision de nuit selon la revendication 14, le dispositif détecteur (D) comprenant un capteur d'images à semi-conducteurs ou un amplificateur de lumière résiduelle.
